# EUROPÄISCHE PATENTSCHRIFT

(11) **EP 1 560 751 B1**
(45) Veröffentlichungstag und Bekanntmachung des Hinweises auf die Patenterteilung: **18.10.2006**
(21) Anmeldenummer: 03789014.2
(22) Anmeldetag: 06.11.2003
(51) Int. Cl.: B65B 1/00, B65B 51/10

(54) **WIDERSTANDSHEIZUNG**
RESISTANCE HEATING
CHAUFFAGE PAR RESISTANCE

(30) Priorität: 06.11.2002 DE 10252019
(43) Veröffentlichungstag der Anmeldung: 10.08.2005
(73) Patentinhaber: CFS Germany GmbH, 35216 Biedenkopf-Wallau (DE)
(72) Erfinder: DONGES, Hans-Günter, 35080 Bad Endbach-Bottenhorn (DE)
(74) Vertreter: Wolff, Felix
(86) Internationale Anmeldenummer: PCT/EP2003/012438
(87) Internationale Veröffentlichungsnummer: WO 2004/041643

(56) Entgegenhaltungen:
- AT-B- 304 061
- DE-A- 2 228 094
- US-A- 3 431 705
- US-A- 3 617 696
- PATENT ABSTRACTS OF JAPAN vol. 1999, no. 05, 31. Mai 1999 (1999-05-31) & JP 11 035014 A (FURUKAWA SEISAKUSHO:KK), 9. Februar 1999 (1999-02-09)

## Beschreibung

Die vorliegende Erfindung betrifft ein Werkzeug in einer Verpackungsmaschine, das als Heizelement einen ersten Formkörper, vorzugsweise eine Platte, mit mehreren elektrisch leitenden Stegen beliebiger Länge aufweist. Des weiteren betrifft die vorliegende Erfindung ein Verfahren zum Erwärmen der Werkzeuge oder der Folie in einer Tiefzieh- oder Siegelstation einer Verpackungsmaschine, sowie ein Verfahren zum Umrüsten eines Werkzeugs.

Lebensmittel werden heutzutage immer öfter in Kunststoffverpackungen zum Verkauf angeboten. Eine solche Kunststoffverpackung besteht in der Regel aus einer Verpackungsmulde, die aus einer Kunststofffolienbahn tiefgezogen wird und einem Deckel, der nach dem Befüllen der Verpackungsmulde mit dem Verpackungsgut, beispielsweise Lebensmitteln, auf die Verpackungsmulde gesiegelt wird.

Vor dem Tiefziehen und beim Siegeln muss die Verpackungsfolie erwärmt werden. Diese Erwärmung erfolgt derzeit vorwiegend mit Heizpatronen, die beispielsweise in Bohrungen in dem Siegelwerkzeug gesteckt, vorzugsweise gepresst, werden und dieses Werkzeug somit beheizen. Diese Heizpatronen haben jedoch den Nachteil, dass die Bohrungen sehr genau gefertigt sein müssen, dass der Wärmeenergieeintrag lokal erfolgt, was in dem zu beheizenden Teil zu einer ungleichmäßigen in der Regel unerwünschten Temperaturverteilung führt, dass der Ausfall einer Heizpatrone oftmals unerkannt bleibt und dass der Ausbau der Heizpatronen praktisch unmöglich ist. Des weiteren weisen die Heizpatronen eine hohe Wärmekapazität auf, so dass die Heizpatronen selbst nach deren Abschaltung noch lange nachheizen und lokal Temperaturspitzen in der Heizpatrone von bis zu 800°C entstehen.

Weiterhin ist ein Werkzeug gemäß dem Oberbegriff des Anspruchs 1 aus der DE-A-2 228.094 bekannt.

Es stellt sich deshalb die Aufgabe, ein Werkzeug in einer Verpackungsmaschine zur Verfügung zu stellen, das die Nachteile des Standes der Technik nicht aufweist und das daher eine möglichst genau einstellbare und ggf. sehr homogene Wärmeverteilung mit einem schnellen Ansprechverhalten und daher geringer Nachheizzeit aufweist, bei dem der Ausfall eines Heizkreises erkennbar ist und dass gleichzeitig kostengünstig sowie leicht de- und montierbar ist.

Gelöst wird die Aufgabe erfindungsgemäß mit einem Werkzeug mit den Merkmalen des Anspruchs 1.

Erfindungsgemäß weist der erste Formkörper mehrere elektrisch leitende Stege auf, die vorzugsweise auf dessen Oberfläche aufgebracht, besonders bevorzugt gedruckt oder geätzt wird oder der ebenfalls bevorzugt in den ersten Formkörper eingebettet, beispielsweise einlaminiert ist. Der Fachmann versteht, dass der Steg auf jede beliebige Art und Weise auf oder in den ersten Formkörper gebracht sein kann, die die gewünschte Anordnung des Steges dauerhaft sicherstellt.

Erfindungsgemäß weist der Steg eine beliebige Länge auf, wobei das Material des Steges vorzugsweise Kupfer, Edelstahl und/oder Aluminium ist.

Der erste Formkörper weist eine beliebige Form oder Größe auf und ist beliebig dünn. Beispielsweise kann er eine Folie, ein Film oder ein Überzug mit einer Dicke im Bereich von vorzugsweise 0,1 - 3000 µm sein, der beispielsweise auf einen anderen Formkörper aufgezogen oder aufgetragen ist und auf dem bzw. in dem der Steg angeordnet ist.

Vorzugsweise wird der Querschnitt des Steges gemäß dem gewünschten Temperaturprofil verändert, wobei ein kleiner Querschnitt in einer relativ hohen und ein großer Querschnitt in einer relativ geringen Temperatur resultiert. Die Stege sind auf oder in dem ersten Formkörper in einem beliebigen Muster angeordnet, wobei er sich jedoch niemals selbst kreuzt. Dieses Muster ist bevorzugt so gewählt, dass der Steg möglichst gleichmäßig auf oder in dem Formkörper verteilt angeordnet ist, so dass eine sehr homogene Temperaturverteilung erzielbar ist. Ebenfalls bevorzugt ist das Muster so angeordnet, dass Bereiche des Formkörpers eine höhere Dichte des Steges aufweisen, als andere, wodurch bei gleichem Querschnitt und Material die Temperatur in den Bereichen höherer Dichte höher ist, als in den Bereichen niedrigerer Dichte.

Das Einspannen des Heizelementes zwischen den zweiten und den dritten Formkörper ermöglicht das leichte Austauschen des Heizelementes. Der Fachmann versteht, dass auch jede andere Verbindung, beispielsweise Kleben geeignet ist, die eine genaue Platzierung des Heizelementes zwischen den zweiten und den dritten Formkörper im Werkzeug sicher stellt. Vorteilhafterweise bietet das Einspannen des Heizelementes jedoch die Möglichkeit der Demontage, beispielsweise um ein Heizelement bei einem Werkzeugwechsel ebenfalls auszutauschen.

Bevorzugt stehen der elektrisch leitende Steg und das zu beheizende Objekt in möglichst unmittelbarem Kontakt zueinander. Daher ist es vorteilhaft, dass der erste Formkörper zwischen dem zweiten Formkörper und dem dritten Formkörper angeordnet ist. Durch die Anordnung und das Einspannen ist der Abstand zwischen dem ersten Formkörper und dem zweiten Formkörper klein. In einer weiteren ebenfalls bevorzugten Ausführungsform sind der erste Formkörper und der zweite Formkörper irreversibel miteinander verbunden, wobei der zweite Formkörper ein Arbeitswerkzeug, beispielsweise ein Siegelrahmen oder eine Heizplatte ist. Dadurch ist der Abstand zwischen dem zu beheizenden Arbeitswerkzeug und dem Heizleiter minimal. Der erste Formkörper und daher ebenfalls der elektrisch leitende Steg sind dann bevorzugt an die Form des zweiten Formkörpers, also des Tiefzieh- oder Siegelwerkzeuges, angepasst.
In einer besonders bevorzugten Ausführungsform ist der erste Formkörper jedoch eine Platte. Dadurch ist er leicht zu fertigen.

Erfindungsgemäß weist der erste Formkörper mehrere elektrisch leitende Stege auf, die nebeneinander und/oder übereinander angeordnet sind und die gemeinsam oder getrennt spannungsversorgt sind.
Die elektrisch leitenden Stege können ineinander verschachtelt angeordnet sein, so dass mehrere Stege die Temperaturverteilung eines Bereiches bestimmen, oder die elektrisch leitenden Stege können auf Bereiche beschränkt sein, so dass die Beschaffenheit und Beschaltung eines Steges allein die Temperaturverteilung eines Bereiches bestimmt. Diese Anordnungen können auch miteinander kombiniert sein.

Bei gleichem Material, Geometrie und Anordnung führt die Erhöhung der Spannung zu einer erhöhten Heizleistung und daher zu höheren Temperaturen, so dass sich die Anzahl der möglichen Temperaturverteilungen erheblich erhöht, insbesondere bei getrennter Spannungsversorgung jedes einzelnen Steges.

Bevorzugt beträgt die Breite des Steges zwischen 0,3 und 30 mm, besonders bevorzugt zwischen 0,4 und 3 mm und ganz besonders bevorzugt 0,45 und 2 mm. Die Höhe der Stege beträgt vorzugsweise 0,09 - 3 mm besonders bevorzugt 0,3 - 0,7 mm. Sowohl die Breite eines Steges als auch seine Höhe können sich in Richtung des Steges ändern, wodurch vorteilhafter weise die Temperatur entlang des Steges verschieden ist. Beispielsweise kann durch eine Querschnittsänderung des Steges im Bereich der Siegelnaht die Temperatur entlang des Steges so variieren, dass die Siegelnaht in einem gewünschten Bereich lösbar ist, während sie in einem anderen gewünschten Bereich nicht lösbar ist. Dabei ist die Temperatur im Bereich des kleineren Querschnitts bei gleicher Spannung und gleichem Material höher und die erzeugte Naht nicht lösbar, als im Bereich des größeren Querschnitts, in dem die erzeugte Naht lösbar ist.

Bei getrennter Spannungsversorgung, beispielsweise indem jeder Steg einen eigenen Heiztrafo aufweist, ist die Heizleistung jedes einzelnen Steges der anliegenden Spannung im wesentlichen proportional, so dass eine andere anliegende Spannung an einem Steg zu einer anderen Temperaturverteilung führt. Dadurch kann das Werkzeug ohne Umrüsten sehr einfach an veränderte Werkzeug- bzw. Verpackungseigenschaften angepasst werden.

Vorzugsweise ist jeder der elektrisch leitenden Stege einzeln regelbar. Dadurch kann die Temperaturverteilung - auch während des Prozessablaufs - sehr vielfältig verändert werden. Beispielsweise kann jeder Steg eine eigene regelbare Spannungsversorgung aufweisen. Da sich Material und Querschnitt eines Steges während des Prozessablaufes nicht ändert, ist die abgegebene Temperatur bei Erhöhen der Spannung höher. Außerdem kann die Temperaturverteilung durch Zu- und Abschalten einzelner Stege verändert werden. Der Ausfall jedes einzelnen Steges ist elektronisch messbar.

In einer bevorzugten Ausführungsform weist das Werkzeug einen oder mehrere Temperatursensoren auf. Dadurch ist die Temperaturverteilung während des Prozesses messbar und gezielt regelbar. Vorteilhafterweise ist dadurch auch eine Übertemperatursicherung möglich. Bevorzugt sind die Temperatursensoren in den ersten Formkörper integriert.

Der Abstand zwischen den Windungen des elektrisch leitenden Steges bzw. zwischen zwei elektrisch leitenden Stegen ist bevorzugt < 6 mm, besonders bevorzugt ≤ 4 mm. Dadurch ist eine sehr homogene Temperaturverteilung möglich.

In einer besonders bevorzugten Ausführungsform ist das Heizelement eine Leiterplatte. Die Platte besteht aus einem elektrisch nicht leitenden Material, auf das ein oder mehrere Stege aufgebracht sind, die einzeln elektrisch ansteuerbar sind. Das Material des Steges ist vorzugsweise Kupfer oder Aluminium, die Dicke der Leiterplatte beträgt bevorzugt 0,5mm bis 1 mm, die Steghöhe beträgt vorzugsweise 0,09 - 0,5 mm. Durch die geringe Steghöhe kann eine gute Wärmehomogenität über die gesamte beheizte Fläche erzielt werden und die Gefahr der Überhitzung ist gering. Der Steg kann auf eine dem Fachmann bekannte Art und Weise auf die Leiterplatte aufgebracht sein, also beispielsweise durch Drucken oder Ätzen. Das Heizelement ist sehr kostengünstig, leicht austauschbar und langlebig. Die Leiterplatte kann auch mehrlagig ausgeführt sein, so dass mehrere Stege übereinander angeordnet sind und ggf. unabhängig voneinander zu- bzw. abschaltbar und regelbar sind.

In einer weiteren bevorzugten Ausführungsform ist das Heizelement eine Heizfolie. Auch diese Ausführungsform ist besonders langlebig und weist ein geringes Gewicht auf. Die Stege von Heizfolien sind ebenfalls dünn und flach, so dass auch mit Heizfolien eine gute Wärmehomogenität erzielbar ist und ebenfalls die Gefahr der Überhitzung gering ist. Außerdem ist das Ansprechverhalten und damit die Nachheizzeit eines Heizelementes dieser Ausführungsform besonders kurz, da Heizfolien eine geringe Eigenmasse aufweisen und daher ihre Wärmekapazität und/oder ihr Wärmeübergangswiderstand gering ist.

Der Fachmann versteht, dass der erste Formkörper entweder aus einem Material mit einem hohen elektrischen Widerstand gefertigt ist, beispielsweise aus Keramik oder einer hitzebeständigen Folie, oder das der elektrisch leitende Steg durch ein isolierendes Material abgedeckt ist, beispielsweise ein Kunststoff oder ein Keramikpapier, oder dass der erste Formkörper mit einem Material mit hohem elektrischem Widerstand überzogen ist.

Vorzugsweise ist zwischen dem ersten Formkörper und dem zweiten Formkörper eine elektrisch isolierende Schicht angeordnet, so dass ein Kurzschluss zwischen Teilen des Steges und dem zweiten Formkörper sicher vermieden wird. Das Isoliermaterial ist vorzugsweise Harteloxal mit einer Schichtdicke < 100 µm, besonders bevorzugt ≤ 50 µm. Ganz besonders bevorzugt wird das Isoliermaterial auf den zweiten Formkörper aufgetragen.

Der dritte Formkörper weist vorzugsweise eine wärmeisolierende Dämmung auf oder besteht aus einem wärmeisolierenden Material, so dass die Temperatur vorteilhafter weise in Richtung zum zweiten Formkörper, also zur verarbeiteten Folie bzw. Verpackung hin, abgegeben wird.

In einer bevorzugten Ausführungsform ist außerdem zwischen dem dritten Formkörper und dem ersten Formkörper eine elastische Schicht angeordnet, beispielsweise aus Glasgewebe oder Silikongummi, oder der dritte Formkörper besteht aus einem elastischen Material. Durch die elastische Schicht kann der erste Formkörper so mit dem zweiten und mit dem dritten Formkörper verspannt sein, dass der Kontakt des ersten Formkörpers zu den beiden anderen Formkörpern überall sichergestellt ist. Insbesondere befinden sich daher zwischen dem ersten Formkörper und dem zweiten Formkörper keine Lufteinschlüsse, so dass die Heizleistung des ersten Formkörpers in idealer Weise an den zweiten Formkörper abgegeben wird.

Vorzugsweise besteht der zweite Formkörper im wesentlichen aus Aluminium oder einer Aluminiumlegierung, da er in dieser Ausführung eine gute Wärmeleitfähigkeit besitzt. In einer ebenfalls bevorzugten Ausführung umfasst der zweite Formkörper auch mehrere Materialien verschiedener Wärmeleitfähigkeit, um so die gewünschte Temperaturverteilung noch zu unterstützen.

Bevorzugt wird das Werkzeug für Niederspannung ausgelegt, so dass die VDE-Richtlinien für Schutzkleinspannungen erfüllt sind. Besonders bevorzugt beträgt die Betriebsspannung < 80 V, ganz besonders bevorzugt < 60V am meisten bevorzugt ≤ 45 V. Dadurch ist das Werkzeug kostengünstig.

Bevorzugt ist das Heizelement mittels elektrischen Anschlusskomponenten mit dem Werkzeug verbunden, beispielsweise durch Steckverbindungen oder mittels Klemmen. Es ist aber auch ein nicht lösbarer Anschluss beispielsweise durch Löten denkbar. Eine lösbare Verbindung, beispielsweise durch Stecken oder Klemmen, ist aber bevorzugt, weil dadurch die Montage bzw. Demontage und der Austausch des Heizelementes leicht und schnell möglich ist. Die Anschlussleitungen können am Heizelement auch durch (Vor-) Konfektionieren hergestellt sein, was die Fertigung und Montage bzw. Demontage des Werkzeugs noch weiter vereinfacht.

In einer bevorzugten Ausführungsform weist das Werkzeug mindestens einen ersten Formkörper und mehrere zweite Formkörper auf. Dadurch können mehrere unterschiedliche Verpackungen in beliebigen Formaten gleichzeitig bearbeitet werden, wobei die Temperaturverteilung für jede der Verpackungen dabei verschieden sein kann und durch die getrennte Regelung jedes einzelnen Steges auch während des Prozessablaufs auf unterschiedliche Art und Weise veränderbar ist. Selbst bei Ausstattung des Werkzeugs mit genau einem Steg ist eine variable Temperaturverteilung durch verschiedene Materialien, Querschnittsänderungen und variable Anordnung des Steges über jeder einzelnen Verpackung möglich. Und auch eine Veränderung der Temperaturverteilung während des Prozessablaufes ist durch Regelung, beispielsweise der Versorgungsspannung, möglich.

In einer bevorzugten Ausführungsform weist das Werkzeug mindestens einen Steg pro zweitem Formkörper auf. Dadurch kann die Temperaturverteilung für jede Verpackung einzeln eingestellt werden und kann für jede Verpackung verschieden sein. Der Ausfall eines Steges kann direkt festgestellt werden. Durch Ausstattung jedes zweiten Formkörpers mit mindestens einem Temperaturfühler ist die Temperaturverteilung für jede Verpackung gezielt regelbar.

Eine mögliche Ausführungsform ist auch durch die Anordnung mehrerer erster Formkörper im Werkzeug gegeben. Gegebenenfalls korrespondieren die ersten und die zweiten Formkörper miteinander. Bevorzugt werden jedoch, beispielsweise bei einer Formatänderung oder Änderung der Verpackungsgröße, nur der bzw. die zweiten Formkörper ausgetauscht und der bzw. die ersten Formkörper werden durch Umprogrammieren der Regelung angepasst.

Der Fachmann erkennt, dass das erfindungsgemäße Werkzeug an jeder beliebigen Stelle der Verpackungsmaschine Anwendung finden kann. Vorzugsweise ist es jedoch Teil einer Tiefzieh- oder Siegelstation oder einer Vorheizung der Folie.

Das erfindungsgemäße Werkzeug hat den Vorteil, dass es sehr einfach und kostengünstig herzustellen ist. Die Temperaturverteilung kann durch die Anordnung des/der Stege auf und/oder im ersten Formkörper, durch das Material und/oder den Querschnitt des/der Stege sowie die Regelung der elektrischen Spannung vielfältig eingestellt werden. Das Werkzeug ist einfach montierbar bzw. kann einfach ausgetauscht werden. Der Ausfall eines oder mehrerer Stege kann sehr schnell und einfach ermittelt werden. Das Ansprechverhalten ist schnell und daher die Nachheizzeit des Werkzeugs kurz. Es eignet sich besonders zum Erwärmen der Werkzeuge oder der Folie in einer Tiefzieh- oder Siegelstation einer Verpackungsmaschine.

Ein weiterer Gegenstand der vorliegenden Erfindung ist deshalb ein Verfahren zum Erwärmen der Werkzeuge oder der Folie in einer Tiefzieh- oder Siegelstation einer Verpackungsmaschine unter Verwendung des erfindungsgemäßen Werkzeuges, bei dem der Steg des ersten Formkörpers mit einer elektrischen Spannung beaufschlagt wird. Dadurch ist die Temperaturverteilung im Werkzeug sehr variabel und genau einstellbar.

Beispielsweise kann beim Siegeln der Steg im Bereich der Siegelnaht mit einer großen Dichte der Windungen angeordnet werden, so dass die Temperatur im Bereich der Siegelnaht sehr hoch ist, während das Packgut erfindungsgemäß keiner erhöhten Temperatur ausgesetzt wird. Oder das Material, die Geometrie und/oder die Anordnung des Steges in einer Tiefziehmaschine kann beispielhaft so gewählt werden, dass die Bereiche, in denen die Verpackungsfolie stärker gedehnt wird, stärker erhitzt werden, als die Bereiche, in denen die Verpackungsfolie nicht oder nur wenig gedehnt wird. Durch Veränderung der Versorgungsspannung der Stege kann - auch während des Prozessablaufes - die Temperaturverteilung weiter angepasst werden.

Vorzugsweise beträgt die Spannung < 70 V. Daher reicht die Auslegung des Werkzeugs für Niederspannungen aus, was kostengünstig ist.

Die Regelung der Heizleistung erfolgt vorzugsweise mit einem Impulsschweißregler durch die Messung des Heizleiterwiderstandes und/oder mit einem Temperatursensor. Dadurch kann die Temperaturverteilung des Werkzeugs auch während des Prozessablaufes gezielt verändert werden.

Das Verfahren ist einfach und kostengünstig durchzuführen und ermöglicht eine bedarfsweise sehr genau einstellbare Temperaturverteilung und Veränderung auch während des Prozessablaufs.

Ein weiterer Gegenstand der vorliegenden Erfindung ist ein Verfahren zum Umrüsten des erfindungsgemäßen Werkzeugs, in dem die Regelung der Temperaturverteilung des Heizleiters des Werkzeugs umprogrammiert wird und dann ggf. der/die zweiten Formkörper des Werkzeugs ausgetauscht werden. Dieses Verfahren ist einfach und kostengünstig durchzuführen und ermöglicht eine sehr schnelle Anpassung einer Verpackungsmaschine beispielsweise bei Formatänderungen oder Änderungen der Verpackungen.

Im folgenden wird die Erfindung anhand der **Figur 1- 4** erläutert. Diese Erläuterungen sind lediglich beispielhaft und schränken den allgemeinen Erfindungsgedanken nicht ein.
- **Figur 1**: zeigt eine Verpackungsmaschine
- **Figur 2**: zeigt eine. Ausführungsform des erfindungsgemäßen Werkzeuges
- **Figur 3**: zeigt eine perspektivische Ansicht eines weiteren erfindungsgemäßen Werkzeuges
- **Figur 4**: zeigt eine Ausführungsform des erfindungsgemäßen Werkzeuges zum gleichzeitigen Herstellen von 16 Verpackungen

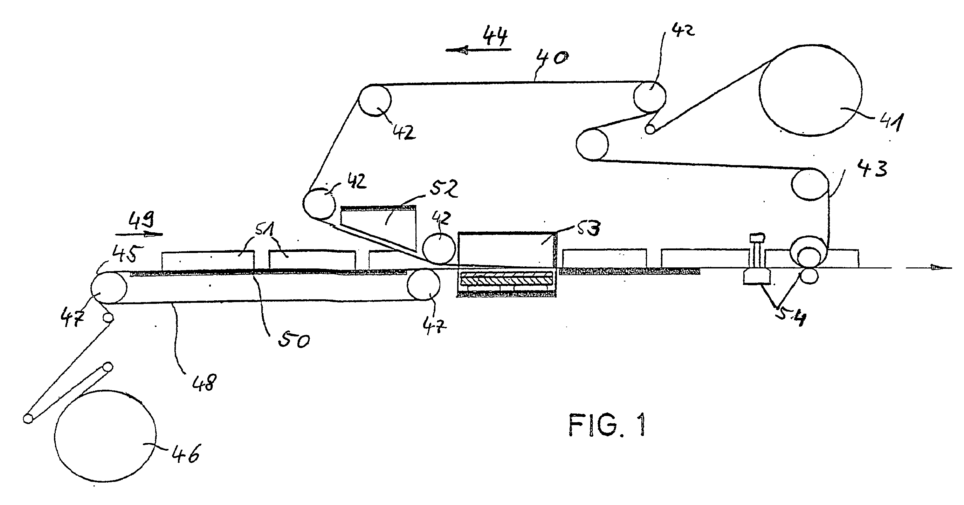

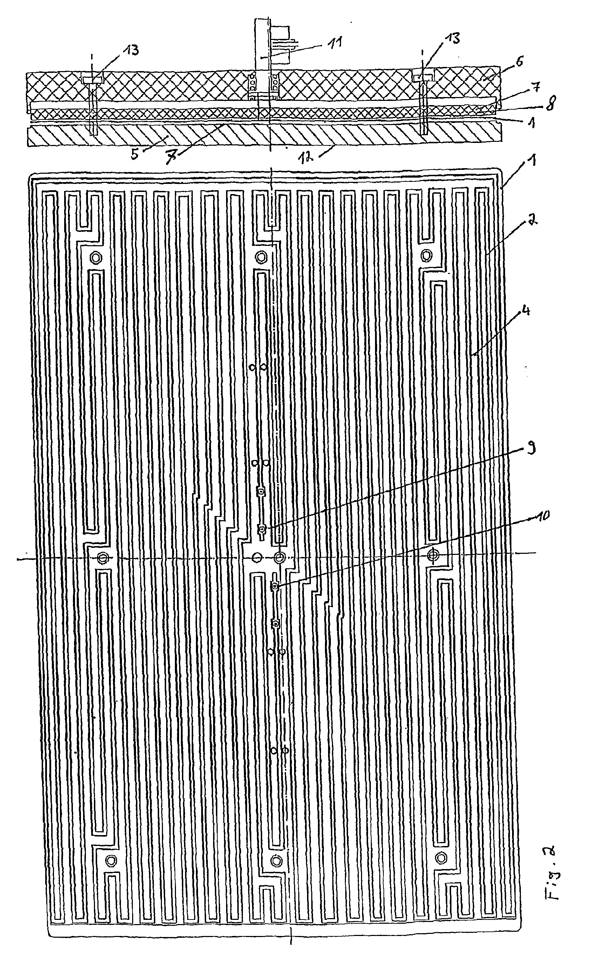

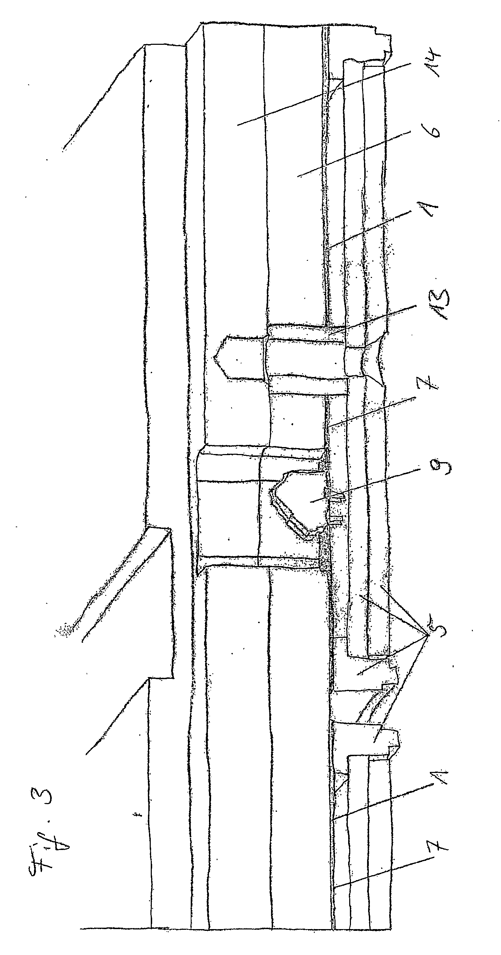

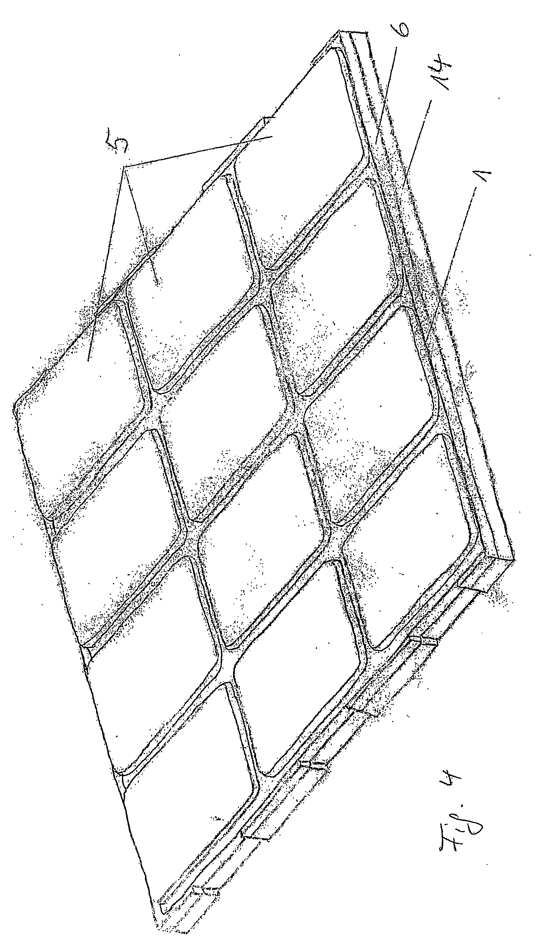

In **Figur 1** wird eine Oberbahn 40 aus einem Vorrat 41 abgerollt und über Umlenkrollen 42 zu den einzelnen Arbeitsstationen geführt. Der Transport der Oberbahn 40 erfolgt über eine Transportkette 43, die die Oberbahn 40 in Richtung des Pfeils 44 transportiert. Eine Unterbahn 45 wird aus einem Vorrat 46 von einer über die Kettenräder 47 angetriebenen Transportkette 48 in Richtung des Pfeils 49 transportiert. Die Unterbahn 45 wird dabei über einen eine Kühlplatte und eine Einlegeschablone aufweisenden Tisch 50 geführt. Hierbei wird auf die bewegte Unterbahn 45 das Packgut 51 aufgelegt und in Förderrichtung 49 zu den weiteren Arbeitsstationen mittransportiert. Unterbahn 45 und Oberbahn 40 werden nach dem Auflegen des Packguts 51 auf die Unterbahn 45 zusammengeführt, nachdem die Oberbahn 40 eine Vorheizstation 52 durchlaufen hat. Die aufeinander liegenden Bahnen 40, 45 durchlaufen gemeinsam mit dem Packgut 51 die Vakuumkammer 53, die aus einem stationären Unterteil und einem absenkbaren Oberteil besteht. Beim Einlaufen des Packguts 51 und der Bahnen 40, 45 in die Vakuumkammer 53 und beim Schließen der Vakuumkammer 53 wird die Oberbahn 40 zeltförmig über das Packgut 51 gespannt. Nach dem Schließen der Vakuumkammer 53 wird aus dem stationären Unterteil und damit auch um das Packgut 51 herum die Luft abgesaugt. Nach dem Evakuieren wird eine Siegelplatte mittels hydraulischer oder pneumatischer Einrichtungen, beispielsweise durch Druckluftkissen gegen eine Siegelvorrichtung (nicht gezeigt) gepresst. Die gesiegelte Vakuumverpackung verlässt anschleißend die Vakuumkammer 53 und wird über eine Kühlplatte zu den Schneideinrichtungen 54 geführt.

**Figur 2** zeigt ein erfindungsgemäßes Werkzeug, in dem vorliegenden Fall eine Heizplatte, wie sie beispielsweise in der Tiefziehstation (in Figur 1 nicht dargestellt), der Vorheizung 52 und/oder der Siegelung eingesetzt wird. Das Werkzeug, in dem vorliegenden Fall eine Heizplatte, weist einen ersten Formkörper 1, eine Kunststoffplatte mit einem hohen elektrischen Widerstand, auf. Auf der Kunststoffplatte befindet sich ein Steg 2, der möglichst gleichmäßig über die gesamte Kunststoffplatte verteilt ist. Der Steg 2 hat eine Breite von 2 mm. Der Abstand 4 zwischen den einzelnen Windungen des Steges 2 beträgt jeweils 4 mm, wodurch die Temperaturverteilung des Werkzeugs sehr homogen ist. Der Steg 2 weist an seinen Enden jeweils einen elektrischen Anschluss 9, 10 auf, mit dem er an eine Spannungsquelle (nicht dargestellt) angeschlossen ist. Der Anschluss an die elektrische Spannungsquelle ist durch den Druckkontakt 11 symbolisiert. Die Kunststoffplatte 1 ist zwischen einem zweiten Formkörper 5, hier eine Aluplatte und einem dritten Formkörper 6, hier eine wärmeisolierende Platte, eingespannt, wobei zwischen der Kunststoffplatte 1 und der wärmeisolierenden Platte 6 noch eine elastische Schicht aus Silikongummi 8 angeordnet ist. Der Fachmann erkennt, dass die Formkörper 1, 5 und 6 nicht plattenförmig sein müssen und dass der zweite Formkörper 5 beispielsweise auch eine Tiefzieh- oder Siegelmatrize sein kann. Die Aluplatten 5 und die wärmeisolierende Platte 6 werden mit den Schrauben 13 so miteinander verschraubt, dass die Kunststoffplatte 1 dazwischen eingespannt wird. Zwischen dem Steg 2 und der Aluplatte 5 ist noch eine 50 µm dicke elektrisch isolierende Schicht 7 aus Harteloxal angeordnet, um einen Kurzschluss des Steges 2 durch die Aluplatte 5 zu vermeiden. Die Dicke der Aluplatte 5 beträgt 10 mm. Im Betrieb sind selbst bei Volllast die Temperaturunterschiede an der Unterseite 12 der Aluplatte 5 weniger als 1 °C.

Die Formkörper 1, 5 und 6 sowie die Schichten 7, 8 können Bohrungen aufweisen, damit ein Unterdruck angelegt werden kann. Diese Ausführungsform des erfindungsgemäßen Werkzeuges ist insbesondere dann interessant, wenn der zweite Formkörper 5 keine Aluplatte sondern eine Tiefziehmatrize ist.

Die Temperaturregelung geschieht entweder über einen Impulsschweißregler durch Messung des Heizleiterwiderstandes und/oder mit einem Temperatursensor (beispielsweise einem PT 100) und einem Temperaturregler von M.K. Juchheim, Moltkestraße 13 - 31, D-36039 Fulda oder Sika Struthweg 7-9, D-34260 Kaufungen.

Die Betriebsspannung des Heizelementes liegt bei ca. 60 V, mit geerdeter Mitte am einem Transformator, so dass nur ca. 30 V als größte Spannung zwischen dem Steg 2 und der Aluplatte 1 entsteht. Der Transformator wird über ein Trafoschaltrelais TSRLF der Firma FSM Elektronik GmbH, Kirchzarten, Deutschland geschaltet. Das Schaltrelais ist Gegenstand des Europäischen Patentes EP 0 575 715 B1, das hiermit als Referenz eingeführt wird und somit als Teil der Offenbarung gilt.

**Figur 3** zeigt eine perspektivische Ansicht eines weiteren erfindungsgemäßen Werkzeuges. Das Heizelement umfasst mehrere erste Formkörper 1, hier Leiterplatten, die mindestens einen Steg aufweisen, mehrere zweite Formkörper 5, in diesem Fall Matrizen zum Siegeln von Verpackungen und einen dritten Formkörper 6, der eine wärmeisolierende elastische Schicht ist, und wird mit der Rückwand 14 mittels Schrauben verspannt. Um ein gleichmäßiges Einspannen der Leiterplatte 1 zwischen die wärmeisolierende elastische Schicht 6 und die Matrizen zum Siegeln 5 zu gewährleisten, werden die Schrauben durch eine Distanzhülse 13 hindurchgeführt und in die Rückwand 14 geschraubt. Die Distanzhülse 13 gewährleistet, dass der Abstand zwischen der Rückwand 14 und den Matrizen zum Siegeln 5 überall im wesentlichen gleich ist und daher die Leiterplatte 1 gleichmäßig an die Matrizen zum Siegeln 5 gedrückt wird. Zwischen der Leiterplatte 1 und den Matrizen zum Siegeln von Verpackungen 5 befindet sich eine elektrisch isolierende Schicht 7, die sicher stellt, dass kein Kurzschluss zwischen den Stegen der Leiterplatte 1 und den Matrizen zum Siegeln 5 auftritt. Der elektrische Anschluss erfolgt mittels Klemmen und/oder Stecken der Verkabelung in den dafür vorgesehenen Stecker 9, der mit der Leiterplatte 1 fest verbunden ist, beispielsweise mittels Lötverbindung. Da jede Matrize zum Siegeln von Verpackungen 5 eine korrespondierende Leiterplatte 1 und einen eigenen elektrischen Anschluss 9 für die Spannungsversorgung und Regelung und mindestens einen Temperatursensor (hier nicht sichtbar) aufweist, kann die Temperaturverteilung jeder Matrize zum Siegeln von Verpackungen 5 einzeln und gezielt geregelt werden. Außerdem wird der Ausfall eines Steges einfach und direkt registriert.

**Figur 4** zeigt eine Ausführungsform des erfindungsgemäßen Werkzeuges zum gleichzeitigen Herstellen von 12 Verpackungen, in diesem Fall beispielsweise zum Vorheizen der Verpackungen. Auch hier umfasst das Werkzeug den ersten Formkörper 1, hier eine Heizfolie, die zweiten Formkörper 5, hier Aluplatten und den dritten Formkörper 6, das ist eine wärmeisolierende Schicht, wobei sich die Heizfolie 1 zwischen den Aluplatten 5 und der wärmeisolierenden Schicht 6 befindet und mit einer Rückwand 14 verspannt ist. Die Heizfolie 1 weist viele elektrisch leitende Stege auf (hier nicht sichtbar), die gemeinsam oder getrennt spannungsversorgt werden können. Außerdem sind in das Werkzeug mehrere Temperatursensoren integriert, bevorzugt mindestens einer pro Verpackung. Dadurch ist die Temperaturverteilung jeder Aluplatte 5 für sich und gezielt regelbar und es werden mit diesem Werkzeug gleichzeitig Verpackungen mit unterschiedlichen Temperaturen beaufschlagt.

### Bezugszeichenliste:

- 1: Erster Formkörper
- 2: Elektrisch leitender Steg
- 3: Breite des Steges
- 4: Abstand zwischen den Windungen des Steges / zwischen zwei Stegen
- 5: Zweiter Formkörper, beispielsweise Aluplatte, Tiefzieh- oder Siegelmatrize
- 6: Dritter Formkörper, beispielsweise wärmeisolierende Platte
- 7: Elektrisch isolierende Schicht, beispielsweise Silikongummi
- 8: Elastische Schicht
- 9: Elektrischer Anschluss
- 10: Elektrischer Anschluss
- 11: Anschluss an die elektrische Spannungsquelle, Druckkontakt
- 12: Unterseite der Aluplatte
- 13: Schrauben, Distanzhülse für Schrauben
- 14: Rückwand
- 40: Oberbahn
- 41: Vorrat der Oberbahn
- 42: Umlenkrollen
- 43: Transportkette Oberbahn
- 44: Transportrichtung der Oberbahn
- 45: Unterbahn
- 46: Vorrat der Unterbahn
- 47: Kettenräder
- 48: Transportkette Unterbahn
- 49: Transportrichtung der Unterbahn, Förderrichtung
- 50: Tisch mit Kühlplatte und Einlegeschablone
- 51: Packgut
- 52: Vorheizstation
- 53: Vakuumkammer
- 54: Schneideinrichtungen

## Patentansprüche

1. Werkzeug in einer Verpackungsmaschine, das als Heizelement einen ersten Formkörper (1), vorzugsweise eine Platte, mit mehreren elektrisch leitenden Stegen (2) beliebiger Länge aufweist, wobei der erste Formkörper (1) zwischen einem zweiten Formkörper (5) und einem dritten Formkörper (6), die beide vorzugsweise Platten sind, angeordnet, vorzugsweise eingespannt ist, wobei der zweite Formkörper (5) ein Arbeitswerkzeug, insbesondere ein Siegelrahmen, ein Tiefziehwerkzeug oder eine Heizplatte ist, **dadurch gekennzeichnet, dass** die elektrisch leitenden Stege (2), die nebeneinander und/oder übereinander angeordnet sind, getrennt voneinander so spannungsversorgt sind, dass in dem zweiten Formkörper (5) eine beliebige Temperaturverteilung erzielbar ist.

2. Werkzeug nach Anspruch 1, **dadurch gekennzeichnet, dass** das Material, die Geometrie und/oder die Anordnung der elektrisch leitenden Stege (2) so gewählt ist, dass in dem zweiten Formkörper (5) eine beliebige Temperaturverteilung erzielbar ist.

3. Werkzeug nach einem der vorherigen Ansprüche, **dadurch gekennzeichnet, dass** die Breite (3) der Stege (2) 0,3 - 30mm, vorzugsweise 0,4 - 3mm, besonders bevorzugt 0,45 - 2mm beträgt.

4. Werkzeug nach einem der vorherigen Ansprüche, **dadurch gekennzeichnet, dass** jeder der elektrisch leitenden Stege (2) einzeln regelbar ist.

5. Werkzeug nach einem der vorherigen Ansprüche, **dadurch gekennzeichnet, dass** es einen oder mehrere Temperatursensoren aufweist.

6. Werkzeug nach einem der vorherigen Ansprüche, **dadurch gekennzeichnet, dass** der Abstand (4) zwischen zwei Stegen < 6 mm, vorzugsweise ≤ 4 mm beträgt.

7. Werkzeug nach einem der vorherigen Ansprüche, **dadurch gekennzeichnet, dass** das Heizelement eine Leiterplatte ist.

8. Werkzeug nach einem der Ansprüche 1 - 6, **dadurch gekennzeichnet, dass** das Heizelement eine Heizfolie ist.

9. Werkzeug nach einem der vorherigen Ansprüche, **dadurch gekennzeichnet, dass** zwischen dem ersten Formkörper (1) und dem zweiten Formkörper (5) eine elektrisch isolierende Schicht (7) angeordnet ist.

10. Werkzeug nach einem der vorherigen Ansprüche, **dadurch gekennzeichnet, dass** der dritte Formkörper (6) eine wärmeisolierende Dämmung aufweist oder aus einem wärmeisolierenden Material besteht.

11. Werkzeug nach einem der vorherigen Ansprüche, **dadurch gekennzeichnet, dass** zwischen dem ersten Formkörper (1) und dem dritten Formkörper (6) eine elastische Schicht (8) angeordnet ist oder dass der dritte Formkörper (6) aus einem elastischen Material besteht.

12. Werkzeug nach einem der vorherigen Ansprüche, **dadurch gekennzeichnet, dass** der zweite Formkörper (5) im wesentlichen aus Aluminium oder eine Aluminiumlegierung besteht.

13. Werkzeug nach einem der vorherigen Ansprüche, **dadurch gekennzeichnet, dass** es mindestens einen ersten Formkörper (1) und mehrere zweite Formkörper (5) aufweist.

14. Werkzeug nach Anspruch 13, **dadurch gekennzeichnet, dass** es mindestens einen Steg (2) pro zweitem Formkörper (5) aufweist.

15. Werkzeug nach einem der vorherigen Ansprüche, **dadurch gekennzeichnet, dass** es Teil einer Vorheiz-, Tiefzieh- oder Siegelstation ist.

16. Verfahren zum Erwärmen der Werkzeuge oder der Folie in einer Tiefzieh- oder Siegelstation einer Verpackungsmaschine mit einem Werkzeug nach einem der vorherigen Ansprüche, **dadurch gekennzeichnet, dass** die Stege (2) des ersten Formkörpers (1) mit einer elektrischen Spannung beaufschlagt werden.

17. Verfahren nach Anspruch 16, **dadurch gekennzeichnet, dass** die Spannung < 70 V beträgt.

18. Verfahren nach Anspruch 16 oder 17, **dadurch gekennzeichnet, dass** die Regelung der Heizleistung mit einem Impulsschweißregler durch die Messung des Heizleitervviderstandes und/oder mit einem Temperatursensor erfolgt.

19. Verfahren zum Umrüsten eines Werkzeugs nach einem der vorherigen Ansprüche 1-15, **dadurch gekennzeichnet, dass** die Regelung der Temperaturverteilung des Heizleiters des Werkzeugs umprogrammiert wird und dass ggf. der/die zweiten Formkörper (5) des Werkzeugs ausgetauscht werden.

## Claims

1. A tool for a packing machine, which contains a heating element in the form of a first body (1), preferably in the form of a plate, with a plurality of electrically conductive ligaments (2) of any length, whereby the first body (1) is arranged, preferably clamped, between a second body (5) and a third body (6), each preferably being plates, whereby the second body (5) is a working tool, in particular a sealing frame, a deep-drawing tool, or a heating plate, **characterized in that** the electrically conductive ligaments (2) being arranged next to and/or above one another are voltage-supplied apart from one another so that any temperature distribution can be achieved in the second body (5).

2. The tool according to claim 1, **characterized in that** the material, the geometry, and/or the configuration of the electrically conductive ligaments (2) is chosen such that any temperature distribution can be achieved in the second body (5).

3. The tool according to one of the preceding claims, **characterized in that** the width (3) of the ligaments (2) is 0.3-30 mm, preferably 0.4-3 mm, particularly preferred 0.45-2 mm.

4. The tool according to one of the preceding claims, **characterized in that** each of the electrically conductive ligaments (2) can be individually regulated.

5. The tool according to one of the preceding claims, **characterized in that** it comprises one or a plurality of temperature sensors.

6. The tool according to one of the preceding claims, **characterized in that** the distance (4) between two ligaments (2) is < 6 mm, preferably ≤ 4 mm.

7. The tool according to one of the preceding claims, **characterized in that** the heating element is a printed circuit board.

8. The tool according to one of claims 1-6, **characterized in that** the heating element is a heating sheet.

9. The tool according to one of the preceding claims, **characterized in that** an electrically insulating layer (7) is arranged between the first body (1) and the second body (5).

10. The tool according to one of the preceding claims, **characterized in that** the third body (6) has a heat-insulation or consists of a heat-insulating material.

11. The tool according to one of the preceding claims, **characterized in that** an elastic layer (8) is arranged between the first body (1) and the third body (6), or that the third body (6) consists of an elastic material.

12. The tool according to one of the preceding claims, **characterized in that** the second body (5) consists essentially of aluminum or an aluminum alloy.

13. The tool according to one of the preceding claims, **characterized in that** it comprises at least a first body (1) and a plurality of second bodies (5).

14. The tool according to claim 13, **characterized in that** it comprises at least one ligament (2) for every second body (5).

15. The tool according to one of the preceding claims, **characterized in that** it is a part of a pre-heating, deep-drawing or sealing station.

16. A method for heating the tools or the sheet in a deep-drawing or sealing station of a packing machine with a tool according to one of the preceding claims, **characterized in that** an electric voltage is applied to the ligaments (2) of the first body (1).

17. The method according to claim 16, **characterized in that** the voltage is < 70 V.

18. The method according to claim 16 or 17, **characterized in that** the regulation of the heat output takes place with a pulse welding regulator by measuring the heat conductor resistance and/or with a temperature sensor.

19. A method for converting a tool according to one of the preceding claims 1-15, **characterized in that** the regulation of the temperature distribution of the heat conductor of the tool is reprogrammed and that, if applicable, the second bodies (5) of the tool are exchanged.

## Revendications

1. Outillage dans une machine d'emballage qui comporte comme élément chauffant, un premier corps de formage (1), de préférence une plaque avec plusieurs pistes électriquement conductrices (2) de longueurs quelconques, le premier corps de formage (1) étant disposé, de préférence serré, entre un deuxième corps de formage (5) et un troisième corps de formage (6), ces deux derniers étant de préférence des plaques, le deuxième corps de formage (5) étant un outillage de travail notamment un cadre de scellement, un outillage d'étirage en profondeur ou une plaque chauffante, **caractérisé en ce que** les pistes électriquement conductrices (2), qui sont disposées côte à côte et/ou superposées, sont alimentées en tension de manière mutuellement indépendante de telle sorte qu'il est possible d'obtenir une répartition de température quelconque dans le deuxième corps de formage (5).

2. Outillage selon la revendication 1, **caractérisé en ce que** le matériau, la géométrie et/ou la disposition des pistes électriquement conductrices (2) sont choisies de telle sorte qu'il est possible d'obtenir une répartition de température quelconque dans le deuxième corps de formage (5).

3. Outillage selon une des revendications précédentes, **caractérisé en ce que** la largeur (3) des pistes (2) est de 0,3 - 30 mm, de préférence 0,4 - 3 mm, plus préférablement 0,45 - 2 mm.

4. Outillage selon une des revendications précédentes, **caractérisé en ce que** chacune des pistes électriquement conductrices (2) est individuellement réglable.

5. Outillage selon une des revendications précédentes, **caractérisé en ce qu'**il comporte un ou plusieurs capteurs de température.

6. Outillage selon une des revendications précédentes, **caractérisé en ce que** la distance (4) entre deux pistes est <6 mm, de préférence ≤4 mm.

7. Outillage selon une des revendications précédentes, **caractérisé en ce que** l'élément chauffant est un circuit imprimé.

8. Outillage selon une des revendications 1 - 6, **caractérisé en ce que** l'élément chauffant est une feuille chauffante.

9. Outillage selon une des revendications précédentes, **caractérisé en ce qu'**une couche électriquement isolante (7) est disposée entre le premier corps de formage (1) et le deuxième corps de formage (5).

10. Outillage selon une des revendications précédentes, **caractérisé en ce que** le troisième corps de formage (6) comporte une isolation contre la chaleur ou qu'il est constitué d'un matériau isolant de la chaleur.

11. Outillage selon une des revendications précédentes, **caractérisé en ce qu'**une couche élastique (8) est disposée entre le premier corps de formage (1) et le troisième corps de formage (6) ou **en ce que** le troisième corps de formage (6) est constitué d'un matériau élastique.

12. Outillage selon une des revendications précédentes, **caractérisé en ce que** le deuxième corps de formage (5) est essentiellement constitué d'aluminium ou d'un alliage d'aluminium.

13. Outillage selon une des revendications précédentes, **caractérisé en ce qu'**il comporte au moins un premier corps de formage (1) et plusieurs deuxièmes corps de formage (5).

14. Outillage selon la revendication 13, **caractérisé en ce qu'**il comporte au moins une piste (2) par deuxième corps de formage (5).

15. Outillage selon une des revendications précédentes, **caractérisé en ce qu'**il fait partie d'une station de préchauffage, d'étirage en profondeur ou de scellement.

16. Procédé de chauffage des outillages ou de la feuille dans une station d'étirage en profondeur ou de scellement d'une machine d'emballage avec un outillage selon une des revendications précédentes, **caractérisé en ce que** les pistes (2) du premier corps de formage (1) sont alimentées par une tension électrique.

17. Procédé selon la revendication 16, **caractérisé en ce que** la tension est <70 V.

18. Procédé selon la revendication 16 ou 17, **caractérisé en ce que** la régulation de la puissance de chauffage est assurée par un régulateur de soudure à impulsion par l'intermédiaire de la mesure de la résistance du conducteur de chauffage et/ou d'un capteur de température.

19. Procédé pour la modification d'un outillage selon une des revendications précédentes 1 - 15, **caractérisé en ce que** la régulation de la répartition de la température du conducteur de chauffage de l'outillage est reprogrammée et **en ce que** le cas échéant le/les deuxième(s) corps de formage (5) de l'outillage sont échangés.
